# EUROPÄISCHE PATENTSCHRIFT

(11) **EP 0 824 991 B1**
(45) Veröffentlichungstag und Bekanntmachung des Hinweises auf die Patenterteilung: **25.10.2000**
(21) Anmeldenummer: 97114479.5
(22) Anmeldetag: 21.08.1997
(51) Int. Cl.: B23K 26/06, B23K 26/00

(54) **Mehrkopf-Lasergravuranlage**
Multi-head laser engraving equipment
Installation de gravure laser à tête multiple

(30) Priorität: 23.08.1996 DE 19634190
(43) Veröffentlichungstag der Anmeldung: 25.02.1998
(73) Patentinhaber: Carl Baasel Lasertechnik GmbH, D-82319 Starnberg (DE)
(72) Erfinder: Kolmeder, Christian, Dr., 82057 Icking (DE); Turban, Ralf, 82396 Pähl/Fischen (DE)
(74) Vertreter: Klunker . Schmitt-Nilson . Hirsch

(56) Entgegenhaltungen:
- EP-A- 0 135 851
- DE-A- 3 447 405
- DE-A- 4 322 252
- PATENT ABSTRACTS OF JAPAN vol. 15, no. 407 (M-1169), 17.Oktober 1991 & JP 03 169489 A (BROTHER IND LTD), 23.Juli 1991,

## Beschreibung

Die Erfindung betrifft eine Mehrkopf-Lasergravuranlage, mit einem Laser, mindestens zwei Belichtungsköpfen mit jeweils einer Optik/Ablenkeinheit, die einen Teil der Laserstrahlenergie als Gravurstrahl auf einen Arbeitsbereich einer Werkstückoberfläche lenkt, und einer Steuereinheit.

Derartige Mehrkopf-Lasergravuranlagen, die typischerweise als Zweikopf-Anlagen ausgeführt sind, dienen beispielsweise zum effizienten Beschriften von Kunststoffteilen, beispielsweise Radioblenden (Ulrich Over, Ulrich Hartmann: "Laserbeschriftung µ-genau", Beiblatt zu Hanser Fachzeitschriften, Oktober 1991, Seiten LS113, LS114, Karl Hanser Verlag, München).

Der Laser ist typischerweise ein Nd:YAG-Laser mit einer Leistung von 50 bis 100 Watt. Dem einen Belichtungskopf ist ein Strahlteiler, dem anderen Belichtungskopf ein Umlenkspiegel vorgeschaltet. Eine in jedem Belichtungkopf vorhandene Galvanometer-Ablenkeinheit mit nachgeordneter Optik bewegt den Strahl im Arbeitsbereich auf einer Werkstückoberfläche. Durch Ein-Aus-Steuern des Laserstrahls wird die Werkstückoberfläche in jedem Arbeitsbereich graviert oder beschriftet. Da Laserbeschriftung eine häufige Anwendung für eine solche Anwendung ist, nennt man einen solchen Belichtungskopf auch Beschriftungskopf oder Ablenkkopf.

Typischerweise werden die Ablenkeinheiten in jedem Belichtungskopf synchron bewegt, so daß bei entsprechender Steuerung des Lasers die gleiche Beschriftung in jedem Arbeitsbereich stattfindet.

Als alternative Ausgestaltung kann für den dem Laser direkt nachgeordneten Belichtungskopf anstelle eines Strahlteilers auch ein Schwenkspiegel oder dergleichen vorgesehen sein, so daß die gesamte Energie des Laserstrahls von dem Schwenkspiegel über die Ablenkeinheit auf den ersten Arbeitsbereich geführt wird, oder aber von dem Umlenkspiegel und dem zweiten Belichtungskopf auf den diesem zugeordneten Arbeitsbereich geführt wird. Auf diese Weise lassen sich mit den zwei Belichtungsköpfen unterschiedliche Muster gravieren, jedoch nur zeitlich gestaffelt. Im Stand der Technik gibt es also nur die zwei einander ausschließenden Möglichkeiten, mit Hilfe eines Strahlteilers gleiche Beschriftung in den Arbeitsbereichen oder mit Hilfe eines Strahlumschalters zwar eine unabhängige Beschriftung, diese jedoch nicht gleichzeitig zu erreichen.

Aus der DE-A-34 47 405 ist eine Laserschneidvorrichtung zum Schneiden einer Papierbahn bekannt, bei der ein Laserstrahl in zwei Teilstrahlen aufgeteilt wird. An jedem Rand befindet sich ein Schneidkopf, der einen Laser-Teilstrahl empfängt. Ein An- und Abschalten des jeweiligen Laser-Teilstrahls ist nicht vorgesehen.

Aus PATENT ABSTRACTS OF JAPAN, Vol. 15, Nr. 407 (M-1169) 17. Oktober 1971; JP 03 169489A ist ein Laserdrucker bekannt, der nach dem Prinzip des Tintenstrahldruckers arbeitet. Von einem Laser wird über ein Lichtleiterfaser ein Laserstrahl auf einen Strahlaufteiler gegeben, der den Laserstrahl in einzelne Teilstrahlen aufteilt, die von separaten Verschlüssen durchgelassen oder gesperrt werden. Durch Bewegen des zu beschriftenden Teils quer zu der Anordnung der optischen Verschlüsse ist eine Matrixbeschriftung möglich. Eine Strahlablenkung erfolgt nicht.

Der Erfindung liegt die Aufgabe zugrunde, eine Mehrkopf-Lasergravuranlage der genannten Art anzugeben, mit deren Hilfe auch eine gleichzeitige unabhängige Beschriftung mit den einzelnen Belichtungsköpfen möglich ist.

Gelöst wird diese Aufgabe bei einer Mehrkopf-Lasergravuranlage der genannten Art erfindungsgemäß dadurch, daß jedem Belichtungskopf ein gesteuerter schneller optischer Schalter zugeordnet ist, der den zugehörigen Teil der Laserstrahlenergie entweder durchläßt oder sperrt, und daß die Schalter von der Steuereinheit unabhängig voneinander ansteuerbar sind.

In einer bevorzugten Ausführungsform ist die erfindungsgemäße Lasergravuranlage als Doppelkopf-Anlage ausgeführt, d. h., es sind zwei Belichtungsköpfe vorhanden, wobei in jedem Belichtungskopf die Hälfte der Ausgangsleistung des Lasers für die Beschriftung zur Verfügung steht. Hierzu ist dem Laser direkt ein Strahlteiler nachgeordnet, der die Energie hälftig aufteilt. Bei einer Dreikopf-Anlage wären ein erster und ein zweiter Strahlteiler vorhanden, um zunächst 2/3 der Strahlenergie durchzulassen, während der zweite Strahlteiler dann die Strahlenergie hälftig aufteilen würde, so daß für jeden Belichtungskopf 1/3 der Laserenergie zur Verfügung steht. Anlagen mit noch mehr Laserköpfen sind entsprechend mit Strahlteilern ausgestattet, um eine gleichmäßige Energieverteilung auf sämtliche Belichtungsköpfe zu erreichen.

Es gibt Lasergravuranlagen, die den Gravurstrahl durch eine Relativbewegung zwischen Belichtungskopf und Werkstückoberfläche über den Arbeitsbereich auf der Werkstückoberfläche führen, wobei an den zu gravierenden Stellen von dem Laser Laserenergie geliefert wird, während an den nicht zu gravierenden Stellen keine Laserenergie geliefert wird. Auch bei solchen Anlagen ist die erfindungsgemäße Maßnahme einsetzbar, d. h. man kann eine Mehrkopfanlage vorsehen, wobei jedem Belichtungskopf ein schneller optischer Schalter zugeordnet ist.

Vorzugsweise wird die Erfindung aber bei Anlagen mit einer Ablenkeinheit in Form beispielsweise von Galvanometerspiegeln eingesetzt. In einer solchen Anlage gibt es während des Belichtungsvorgangs keine Relativbewegung zwischen der Werkstückoberfläche und der Laseroptik, stattdessen wird der zu beschriftende Arbeitsbereich der Werkstückoberfläche von der Ablenkeinheit abgerastert.

Der vorgesehene schnelle optische Schalter ist in der Lage, den Teilstrahl entweder durchzulassen, so daß er von der Ablenkeinheit auf die erforderliche Stelle der Arbeitsfläche gelenkt wird, oder den Strahl zu sperren. Dieses Sperren geschieht vorzugsweise mit Hilfe eines Ablenkprismas, welches in den speziell für diesen Zweck gebündelten Laserstrahl geschwenkt wird. Dieser mechanische Schwenkvorgang kann mit Hilfe einer speziellen Ablenkeinheit, beispielsweise einer nach Art eines Galvanometerspiegels ausgestalteten Ablenkeinheit, mit einer Frequenz von mehr als 1000 Hz geschaltet werden. Speziell dient als Schalter ein Ablenkprisma, welches den eine relativ hohe Energiedichte aufweisenden Teilstrahl im Sperrzustand des Schalters auf eine Absorbereinheit lenkt, wo die Energie des Teilstrahls abgeleitet wird.

Bei der erfindungsgemäßen Mehrkopf-Lasergravuranlage wird nicht der Laser selbst entsprechend dem Beschriftungsmuster angesteuert, sondern es werden die optischen Schalter so angesteuert, daß das gewünschte Beschriftungsmuster entsteht, während der Laser selbst dauernd angeschaltet bleibt.

Bei einer Doppelkopf-Lasergravuranlage mit einem Nd:YAG-Laser einer Leistung von beispielsweise 80 Watt wird jeder einzelne optische Schalter im ungünstigsten Fall dauernd von der vollen Leistung des Teilstrahls, also der halben Laserleistung (40 Watt) getroffen. Es hat sich gezeigt, daß mit Hilfe eines Ablenkprismas diese Energie auch in ihrer gebündelten Form ableitbar ist.

Durch die erfindungsgemäße Ausbildung der Lasergravuranlage können natürlich ebenso wie bei der bekannten Anlage die (beiden) Arbeitsbereiche mit identischen Beschriftungsmustern bearbeitet werden. In diesem Fall werden die beiden optischen Schalter dann mit gleichen Steuersignalen angesteuert. Die Ansteuerung der beiden Schalter kann aber auch unabhängig erfolgen, so daß bei einer Doppelkopf-Lasergravuranlage die beiden Arbeitsbereiche unterschiedliche Beschriftungsmuster erhalten können. Dabei sind dann die Belichtungsköpfe derart justiert, daß die beiden Arbeitsbereiche zueinander benachbart sind.

In einer anderen Ausführungsform der Erfindung sind die Arbeitsbereiche aber derart eingestellt, daß sie sich zumindest teilweise überlappen. Man kann bei einer solchen Anlage im Überlappungsbereich doppelt so schnell beschriften wie in den übrigen Bereichen. Dies kann bei manchen Beschriftungsmustern von Vorteil sein.

Im folgenden werden Ausführungsbeispiele der Erfindung anhand der Zeichnung näher erläutert. Es zeigen:
- Figur 1: eine schematische Darstellung einer Doppelkopf-Lasergravuranlage;
- Figuren 2a und 2b: schematisch die Anordnung von zwei Arbeitsbereichen der Anlage nach Figur 1,
- Figur 3: eine schematische Darstellung eines schnellen optischen Schalters, wie er in Figur 1 in den Positionen 6 und 7 schematisch dargestellt ist,
- Figur 4: eine Doppelkopf-Lasergravuranlage entsprechend dem Stand der Technik,
- Figur 5: eine schematische Darstellung einer Doppelkopf-Lasergravuranlage für gleichzeitige und gleiche Beschriftung und
- Figur 6: eine schematische Darstellung einer Doppelkopf-Lasergravuranlage für unabhängige, aber nicht gleichzeitig durchführbare Beschriftung entsprechend dem Stand der Technik.

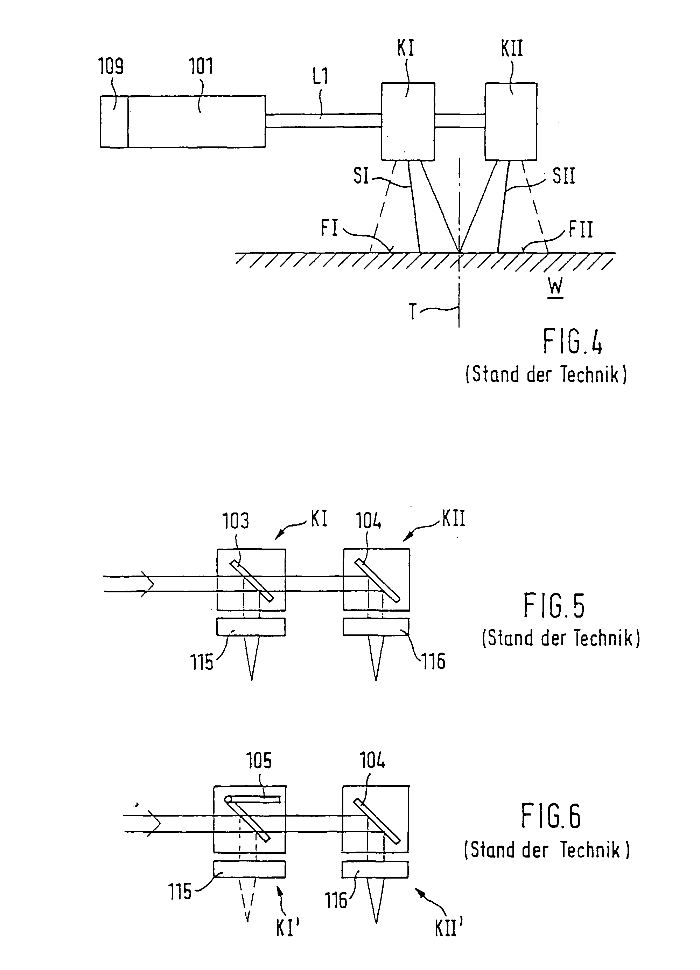

Bevor die erfindungsgemäße Mehrkopf-Lasergravuranlage näher erläutert wird, soll kurz der Stand der Technik anhand der Figuren 4 bis 6 erläutert werden.

Ein Nd:YAG-Multimode-Laser 101 mit einer schematisch angedeuteten elektronischen Steuereinheit 109 liefert einen Laserstrahl L1 auf ein erstes Belichtungsmodul KI. (Dieses "Modul" muß nicht unbedingt eine bauliche Einheit bilden.) In dem Belichtungsmodul KI befindet sich ein Strahlteiler oder ein Strahlumschalter, was weiter unten noch näher erläutert wird. Dem ersten Belichtungsmodul KI ist ein zweites Belichtungsmodul KII nachgeordnet, das den Laserstrahl L1 entweder überhaupt nicht, vollständig oder als Teilstrahl (50 %) empfängt.

Zu jedem Belichtungsmodul KI und KII gehört ein Belichtungskopf 115, 116 (siehe Fig. 5 und 6) in Form einer Galvanometer-Ablenkeinheit und eine Optik, so daß er einen Gravurstrahl SI bzw. SII auf einen Arbeitsbereich FI bzw. FII der Oberfläche eines Werkstücks W führt. Der Bearbeitungsstrahl rastert den Arbeitsbereich ab. Durch Ein-/Aus-Steuerung des Lasers 101 ist der Gravurstrahl SI bzw. SII entweder eingeschaltet oder ausgeschaltet, so daß ein entsprechendes Muster graviert (beschriftet) wird. Durch eine Trennlinie T in Figur 4 ist angedeutet, daß die Arbeitsbereiche FI und FII nicht auf ein und demselben Werkstück W liegen müssen, sondern daß es sich um zwei einzelne Werkstücke handeln kann.

Figur 5 zeigt eine Ausführungsform der Lasergravuranlage nach Figur 4, und zwar eine Ausführungsform für gleichzeitige und gleiche Beschriftung. Hierzu befindet sich in dem ersten Belichtungsmodul KI ein Strahlteiler 103, der ca. 50 % der Laserstrahlenergie durchläßt und 50 % umlenkt. In dem Belichtungsmodul KII befindet sich ein Umlenkspiegel 104. Bei jedem Belichtungsmodul ist mit 115, 116 eine Galvanometer-Ablenkeinheit in Verbindung mit einem Objektiv schematisch als Belichtungskopf angedeutet. Die hier als baulich integrierte Modulen ausgebildeten Teile KI und KII können auch räumlich getrennt sein, z. B. kann zwischen dem Strahlteiler bzw. Umlenkspiegel und dem nachgeordneten Belichtungskopf eine optische Faser angeordnet sein. Durch Steuerung des Laserstrahls gelangt auf den Arbeitsbereich jedes Belichtungskopfs eine gleichgroße Menge Laserstrahlenergie, so daß eine gleichzeitige Beschriftung mit gleicher Information (gleiches Muster) erfolgt.

Figur 6 zeigt eine Ausführungsform, bei der das erste Belichtungsmodul KI' einen Strahlumschalter in Form eines schwenkbaren Spiegels 105 enthält. Das Belichtungsmodul KII' ist genauso ausgebildet wie in Figur 5 der Belichtungskopf KII, d. h., es enthält einen Umlenkspiegel 104.

Je nachdem, ob der Schwenkspiegel 105 in Figur 6 hochgeschwenkt ist oder in seine gestrichelt dargestellte Umlenkstellung verschwenkt ist, gelangt der Laserstrahl entweder voll in das Belichtungsmodul KII', oder wird vollständig abgelenkt, um auf den Arbeitsbereich zu gelangen, der zu dem Belichtungsmodul KI' gehört.

Man sieht also durch Vergleich der Figuren 5 und 6, daß entweder nur eine gleichzeitige Beschriftung mit dem gleichen Beschriftungsmuster oder aber eine unabhängige, dafür aber nicht gleichzeitige Beschriftung möglich ist.

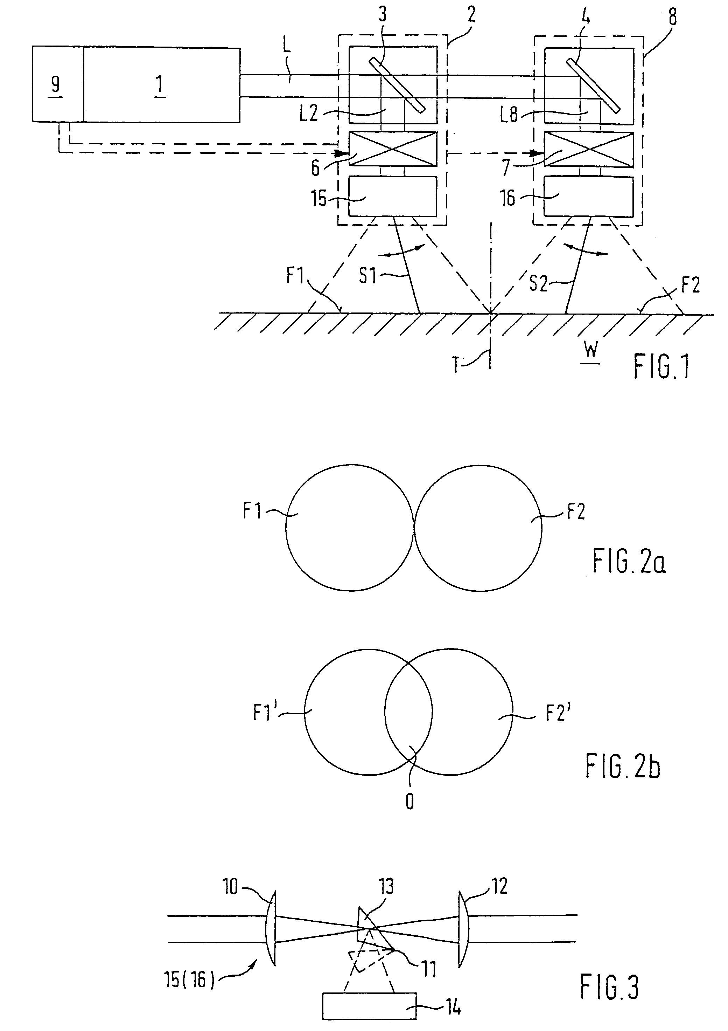

Bei der erfindungsgemäßen Mehrkopf-Lasergravuranlage gemäß Figur 1 ist nicht nur eine gleichzeitige Beschriftung der Arbeitsbereiche mit gleichem Beschriftungsmuster, sondern auch eine unterschiedliche und gleichzeitige Beschriftung in beiden Arbeitsbereichen möglich.

Die in Figur 1 schematisch dargestellte Anlage ist als Doppelkopf-Lasergravuranlage ausgebildet, wie aber bereits oben erläutert wurde, kann die Anlage auch mit entsprechender Modifizierung als Dreikopf-, Vierkopf-, ...-Anlage ausgeführt sein.

Ein Nd:YAG-Laser mit einer Ausgangsleistung von 60 Watt liefert einen Laserstrahl L auf ein erstes Belichtungsmodul 2, das einen Strahlteiler 3 enthält. Der Strahlteiler 3 lenkt 50 % des Laserstrahls ab und läßt 50 % Energie durch. Der durchgelassene Laserstrahl (Teilstrahl) gelangt in das zweite Belichtungsmodul 8, das einen Umlenkspiegel 4 enthält.

Der umgelenkte Laserstrahl L₂ von dem Strahlteiler 2 und der umgelenkte Teilstrahl L₈ von dem Umlenkspiegel 4 gelangen jeweils auf einen schnellen Schalter 6 bzw. 7.

Ein dem schnellen Schalter 6 und 7 nachgeordneter Belichtungskopf 15 bzw. 16 enthält jeweils eine in Figur 1 nicht näher dargestellte Ablenkeinheit/Optik und bewegt den fokussierten Strahl S1 bzw. S2 in einem Raster über die zugehörige Arbeitsfläche F1 bzw. F2 auf der Oberfläche des Werkstücks W.

Wie bereits in Verbindung mit Figur 4 erläutert, deutet auch in Figur 1 eine Trennlinie T an, daß die Arbeitsbereiche F1 und F2 auch zu verschiedenen Werkstücken gehören können.

Die beiden schnellen optischen Schalter 6 und 7 in Figur 1 sind über eine nicht dargestellte Verbindung mit einer Steuereinheit 9 verbunden, die jeden Schalter 6 und 7 unabhängig öffnet oder schließt. Durch dieses Öffnen und Schließen wird der Gravurstrahl S1 bzw. S2 der Belichtungsköpfe 15 und 16 hell-/dunkel getastet, so daß eine entsprechende Beschriftung der Arbeitsfläche F1 bzw. F2 erfolgt.

Figuren 2a und 2b zeigen mögliche Ausführungsformen für die Arbeitsbereiche F1 und F2. Nach Figur 2a sind die beiden Arbeitsbereiche F1 und F2 einander benachbart. Nach Figur 2b überlappen sich die Arbeitsbereiche F1' und F2' teilweise, so daß im Überlappungsbereich O eine besonders schnelle Beschriftung erfolgen kann, weil dort nämlich die beiden unabhängig führbaren Gravurstrahlen S1 und S2 für die Beschriftung zur Verfügung stehen.

Figur 3 zeigt schematisch die Ausgestaltung des in Figur 1 schematisch dargestellten optischen Schalters 6. Da der optische Schalter 7 identisch wie der Schalter 6 ausgebildet ist, soll hier nur der Schalter 6 erläutert werden.

Das parallele Strahlenbündel des Laserstrahls wird von einer Linse 10 gebündelt. An der Engstelle des Strahls befindet sich ein um eine Schwenkachse 11 schwenkbares Prisma 13, welches in der ausgezogenen Stellung die gesamte Strahlenergie auf eine Absorbereinheit 14 ablenkt. Damit gelangt keine Strahlenergie zu der Ablenkeinheit/Optik, die sich rechts an die in Figur 3 dargestellte Anordnung nach der Kollimator-Linse 12 anschließt. Die Linsen 10 und 12 bilden ein Kepler'sches Teleskop, in dessen Fokus das Prisma eingeschwenkt ist.

In Figur 3 ist gestrichelt die Offenstellung des Schalters dargestellt. In dieser Stellung ist das Prisma 13 um die Schwenkachse 11 aus dem Strahlengang herausgeschwenkt, so daß die volle Energie des Strahls durch die Linse 12 auf die Ablenkeinheit/Optik und dann auf den zugehörigen Arbeitsbereich gelangt.

Das Verschwenken des Prismas 13 um die Schwenkachse 11 erfolgt mit Hilfe einer Ablenkeinheit, die ähnlich wie ein Galvanometer-Spiegel ausgebildet ist. Eine solche Anordnung läßt ein Umschalten mit einer Zeitspanne von weniger als einer Millisekunde zwischen Offenstellung und Schließstellung (und umgekehrt) zu.

Die in Figur 3 schematisch dargestellte Absorbereinheit 14 nimmt die auftreffende Strahlenergie auf und führt sie in die Umgebung ab. Bei dem hier gewählten Beispiel eines Nd:YAG-Lasers mit einer Leistung von 60 Watt muß von dem Prisma 13 und der Absorbereinheit 14 im ungünstigsten Fall eine gebündelte Leistung von 30 Watt abgelenkt bzw. abgeführt werden.

Abwandlungen der oben beschriebenen Ausführungsform sind im Rahmen der Erfindung möglich. Gemäß Fig. 1 sind Strahlteiler, schneller optischer Schalter und Belichtungskopf baulich zu einem Modul 2 zusammengefaßt, und der Umlenkspiegel 4, der optische Schalter 7 und der zugehörige Belichtungskopf sind zu einem Modul 8 baulich zusammengefaßt. Abweichend davon können die beiden optischen Schalter 6 und 7 gemäß Figur 1 auch an einer anderen Stelle fern von dem Strahlteiler 3 bzw. dem Umlenkspiegel 4 angeordnet sein. Die Laserenergie der Teilstrahlen L₂ und L₈ wird dann z. B. über optische Fasern zu dem betreffenden optischen Schalter übertragen.

Auch brauchen die Belichtungsköpfe 15 bzw. 16 baulich nicht direkt dem betreffenden optischen Schalter 6 bzw. 7 nachgeordnet zu sein. Auch hier kann eine räumliche Trennung z. B. mit Hilfe optischer Fasern erfolgen.

## Patentansprüche

1. Mehrkopf-Lasergravuranlage, mit einem Laser (1), mindestens zwei Belichtungsköpfen (15, 16) mit jeweils einer Optik/Ablenkeinheit, die einen Teil der Laserstrahlenergie als Gravurstrahl (S1, S2) auf einen Arbeitsbereich (F1, F2) einer Werkstückoberfläche lenkt, und einer Steuereinheit (9), **dadurch gekennzeichnet**, daß jedem Belichtungskopf (15, 16) ein gesteuerter schneller optischer Schalter (6, 7) zugeordnet ist, der den zugehörigen Teil der Laserstrahlenergie entweder durchläßt oder sperrt, und daß die Schalter (6, 7) von der Steuereinheit (9) unabhängig voneinander ansteuerbar sind.

2. Anlage nach Anspruch 1, **dadurch gekennzeichnet**, daß zwei Belichtungsköpfe (15, 16) mit je einem optischen Schalter (6, 7) vorgesehen sind.

3. Anlage nach Anspruch 2, **dadurch gekennzeichnet**, daß der erste Belichtungskopf (15) ein Strahlteiler (3) und dem zweiten Belichtungskopf (16) ein Umlenkspiegel (4) vorgeschaltet ist.

4. Anlage nach einem der Ansprüche 1 bis 3, **dadurch gekennzeichnet**, daß jeder Schalter (6, 7) ein in den gebündelten Teilstrahl schwenkbares Ablenkprisma (13) aufweist.

5. Anlage nach Anspruch 4, **dadurch gekennzeichnet**, daß eine Absorbereinheit (14) vorgesehen ist, die den von dem Ablenkprisma (13) abgelenkten Strahl aufnimmt.

6. Anlage nach einem der Ansprüche 1 bis 5, **dadurch gekennzeichnet**, daß jeder Belichtungskopf (15, 16) eine Ablenkeinheit, insbesondere eine Galvanometerablenkeinheit aufweist.

7. Anlage nach einem der Ansprüche 1 bis 6, **dadurch gekennzeichnet**, daß sich die Arbeitsbereiche (F1', F2") zumindest teilweise überlappen.

8. Anlage nach einem der Ansprüche 1 bis 7, **dadurch gekennzeichnet**, daß der Schalter als schwenkbares Ablenkprisma (13) ausgebildet ist, das abhängig von einem Ansteuersignal in den Zwischenfokus eines Kepler'schen Teleskops (10, 12) eines zu schaltenden Laserstrahlengangs bzw. aus dem Zwischenfokus herausschwenkbar ist.

## Claims

1. A multi-head laser engraving machine having a laser (1), at least two exposure heads (15, 16) each with an optical system/deflection unit for directing part of the laser beam energy to a working area (F1, F2) of a workpiece surface as an engraving beam (S1, S2), and a control unit (9), characterized in that each exposure head (15, 16) has associated therewith a controlled fast optical switch (6, 7) for either transmitting or blocking the corresponding part of the laser beam energy, and the switches (6, 7) are drivable by the control unit (9) independently of each other.

2. The machine of claim 1, characterized in that two exposure heads (15, 16) each with an optical switch (6, 7) are provided.

3. The machine of claim 2, characterized in that the first exposure head (15) is preceded by a beam splitter (3) and the second exposure head (16) by a tilted mirror (4).

4. The machine of any of claims 1 to 3, characterized in that each switch (6, 7) has a deflection prism (13) swiveling into the focused partial beam.

5. The machine of claim 4, characterized in that an absorber unit (14) is provided for receiving the beam deflected by the deflection prism (13).

6. The machine of any of claims 1 to 5, characterized in that each exposure head (15, 16) has a deflection unit, in particular a galvanometer deflection unit.

7. The machine of any of claims 1 to 6, characterized in that the working areas (F1', F2') at least partly overlap.

8. The machine of any of claims 1 to 7, characterized in that the switch is formed as a swiveling deflection prism (13) to be swiveled in accordance with a drive signal into the intermediate focus of a Kepler telescope (10, 12) of a laser beam path to be switched or out of said intermediate focus.

## Revendications

1. Installation de gravure au laser à plusieurs têtes, comportant un laser (1), au moins deux têtes d'exposition (15, 16) ayant chacune une unité optique/de déflexion qui dirige une partie de l'énergie de rayon laser comme rayon de gravure (S1, S2) sur une zone de travail (F1, F2) d'une surface de pièce à traiter, et une unité de commande (9), caractérisée en ce qu'il est associé à chaque tête d'exposition (15, 16) un interrupteur optique rapide commandé (6, 7) qui laisse passer ou bloque la partie associée de l'énergie de rayon laser, et en ce que les interrupteurs (6, 7) peuvent être commandés indépendamment l'un de l'autre par l'unité de commande (9).

2. Installation selon la revendication 1, caractérisée en ce qu'il est prévu deux têtes d'exposition (15, 16) ayant chacune un interrupteur optique (6, 7).

3. Installation selon la revendication 2, caractérisée en ce qu'une lame séparatrice (3) est placée en amont de la première tête d'exposition (15) et en ce qu'un miroir de déviation (4) est placé en amont de la deuxième tête d'exposition (16).

4. Installation selon l'une des revendications 1 à 3, caractérisée en ce que chaque interrupteur (6, 7) comporte un prisme de déflexion (13) pivotant dans le rayon partiel en faisceau.

5. Installation selon la revendication 4, caractérisée en ce qu'il est prévu une unité d'absorption (14) qui reçoit le rayon défléchi par le prisme de déflexion (13).

6. Installation selon l'une des revendications 1 à 5, caractérisée en ce que chaque tête d'exposition (15, 16) comporte une unité de déflexion, notamment une unité de déflexion galvanométrique.

7. Installation selon l'une des revendications 1 à 6, caractérisée en ce que les zones de travail (F1' et F2'') se chevauchent au moins partiellement.

8. Installation selon l'une des revendications 1 à 7, caractérisée en ce que l'interrupteur est conçu comme un prisme de déflexion pivotant (13) qui peut pivoter en fonction d'un signal de commande dans le foyer intermédiaire d'un télescope de Kepler (10, 12) d'une trajectoire de rayon laser à commuter, ou hors du foyer intermédiaire.
